# EUROPEAN PATENT APPLICATION

(11) **EP 4 538 446 A1**
(43) Date of publication of application: **16.04.2025**
(21) Application number: 23826438.6
(22) Date of filing: 20.06.2023
(51) Int. Cl.: D06F 58/20, D06F 58/04, D06F 58/02

(54) **CLOTHES TREATMENT APPARATUS**

(30) Priority: 22.06.2022 CN 202210713845
(71) Applicant: Wuxi Little Swan Electric Co., Ltd., Wuxi, Jiangsu 214028 (CN)
(72) Inventor: MA, Derong, Wuxi, Jiangsu 214028 (CN); WU, Zhiyuan, Wuxi, Jiangsu 214028 (CN); MOU, Qiuqi, Wuxi, Jiangsu 214028 (CN); KO, Hong Seok, Wuxi, Jiangsu 214028 (CN)
(74) Representative: Ran, Handong
(86) International application number: PCT/CN2023/101432
(87) International publication number: WO 2023/246791

(57) **Abstract**

A clothes treatment apparatus, comprising: a housing, a clothes treatment tub (1), and an air channel housing assembly. The tub bottom of the clothes treatment tub (1) is provided with a first air inlet region (11) provided in the middle of the tub bottom and a second air inlet region (12) surrounding the first air inlet region; a first air channel (10) and a second air channel (20) are defined between the air channel housing assembly and the housing; when the clothes treatment apparatus is in a first ventilation mode, the first air inlet region (11) is communicated with the first air channel (10) and an inner cavity of the clothes treatment tub (1), and when the clothes treatment apparatus is in a second ventilation mode, the first air inlet region (11) is communicated with the first air channel (10) and the inner cavity of the clothes treatment tub (1), and the second air inlet region (12) is communicated with the second air channel (20) and the inner cavity of the clothes treatment tub (1).

## Description

### CROSS-REFERENCE TO RELATED APPLICATION

This application is based on and claims priority to Chinese Patent Application No. 202210713845.X filed on June 22, 2022, the entire contents of which are incorporated herein by reference.

### FIELD

The present application relates to the field of clothes treatment apparatus technologies, and more particularly, to a clothes treatment apparatus.

### BACKGROUND

In the related art, an airflow may flow through an inner cavity of a clothes treatment drum in one way, in such a manner that that airflow in the inner cavity of the clothes treatment drum is uneven, which leads to adhesion of clothes to a filter screen in a drying process. Also, when a flow rate of the airflow is slow and a direction of the airflow cannot be controlled, penetration of the airflow is unsatisfactory, and drying cannot be effectively realized in some regions, which influences clothes treatment performance of a clothes treatment apparatus, affecting use experience of a user. Therefore, there is room for improvement.

### SUMMARY

The present application aims to solve at least one of the technical problems in the related art to some extent. To this end, there is provided a clothes treatment apparatus. The clothes treatment apparatus is switchable between different ventilation modes, and realizes different clothes drying effects through the switching between the ventilation modes, which ensures the clothes drying effect of the clothes treatment apparatus and enhances clothes treatment performance of the clothes treatment apparatus, improving use experience of a user.

According to embodiments of the present application, a clothes treatment apparatus includes a housing, a clothes treatment drum, and an air duct casing assembly. The clothes treatment drum is rotatably disposed inside the housing. The clothes treatment drum has a first air inlet region and a second air inlet region at a drum bottom of the clothes treatment drum. The first air inlet region is located at a center of the drum bottom, and the second air inlet region surrounds the first air inlet region. A first air duct and a second air duct is defined between air duct casing assembly and the housing. The clothes treatment apparatus has a first ventilation mode and a second ventilation mode. In the first ventilation mode, the first air duct is in communication with an inner cavity of the clothes treatment drum through the first air inlet region. In the second ventilation mode, the first air duct is in communication with the inner cavity of the clothes treatment drum through the first air inlet region, and the second air duct is in communication with the inner cavity of the clothes treatment drum through the second air inlet region.

According to the embodiments of the present application, the clothes treatment apparatus is switchable between different ventilation modes, and realizes different clothes drying effects through the switching between the ventilation modes, which ensures the clothes drying effect of the clothes treatment apparatus and enhances the clothes treatment performance of the clothes treatment apparatus, improving the use experience of the user.

In addition, the clothes treatment apparatus according to the embodiments of the present application may also have the following additional technical features.

According to some embodiments of the present application, the drum bottom is provided with an air guide cover at an inner side of the drum bottom. The air guide cover covers the first air inlet region and has a plurality of ventilation holes, and the first air duct is in communication with the inner cavity of the clothes treatment drum through the plurality of ventilation holes.

According to some embodiments of the present application, the air guide cover protrudes from an inner surface of the drum bottom and has a circumferential wall and a top wall. The plurality of ventilation holes are formed at the circumferential wall of the air guide cover and/or the top wall of the air guide cover.

According to some embodiments of the present application, the air guide cover is formed into a conical cover.

According to some embodiments of the present application, the plurality of ventilation holes include a plurality of first ventilation holes arranged at intervals on a side wall of the conical cover in a circumferential direction of the conical cover and/or an axial direction of the conical cover; and/or the plurality of ventilation holes include a second ventilation hole formed on a top of the conical cover.

According to some embodiments of the present application, the first air inlet region has a plurality of first air inlet holes, and the first air duct is in communication with the inner cavity of the clothes treatment drum through the plurality of first air inlet holes. The second air inlet region has a plurality of second air inlet holes, and the second air duct is in communication with the inner cavity of the clothes treatment drum through the plurality of second air inlet holes.

According to some embodiments of the present application, the plurality of first air inlet holes are arranged at intervals in a circumferential direction of a circle, each of the plurality of first air inlet holes are formed into an elongated hole extending in the circumferential direction of the circle.

According to some embodiments of the present application, the plurality of second air inlet holes are arranged at intervals in a circumferential direction of the first air inlet region and/or a radial direction of the first air inlet region, and a flow cross-sectional area of the plurality of second air inlet holes is smaller than a flow cross-sectional area of the plurality of first air inlet holes.

According to some embodiments of the present application, a flow cross-sectional area of the plurality of second air inlet holes is smaller than a flow cross-sectional area of the plurality of first air inlet holes.

According to some embodiments of the present application, the clothes treatment apparatus further includes a first seal and a second seal. The first seal is disposed between the housing and the drum bottom, and a first transition cavity is defined by the first seal, the housing, and the drum bottom. The plurality of first air inlet holes are in communication with the first air duct through the first transition cavity. The second seal is disposed between the housing and the drum bottom, and a second transition cavity is defined by the first seal, the second seal, the housing, and the drum bottom. The plurality of second air inlet holes are in communication with the second air duct through the second transition cavity.

According to some embodiments of the present application, air duct casing assembly includes a first cover body and a second cover body. The first cover body is disposed outside the housing, and the first air duct is defined between the housing and the first cover body. The second cover body covers an outer side of the first cover body, and the second air duct is defined by the second cover body, the first cover body, and the housing. An air inlet cavity is defined between the second cover body and the housing, and the air inlet cavity is in communication with an inlet of the first air duct and an inlet of the second air duct.

According to some embodiments of the present application, the clothes treatment apparatus further includes a switching device configured to expose or cover the inlet of the second air duct, allowing the clothes treatment apparatus to be switchable between the first ventilation mode and the second ventilation mode through controlling a flowing or an interruption of an airflow between the second air duct and the air inlet cavity.

Additional aspects and advantages of the present application will be provided at least in part in the following description, or will become apparent at least in part from the following description, or can be learned from practicing of the present application.

### BRIEF DESCRIPTION OF THE DRAWINGS

The above and/or additional aspects and advantages of the present application will become more apparent and more understandable from the following description of embodiments taken in conjunction with the accompanying drawings.
FIG. 1 is a schematic partial structural view of a clothes treatment apparatus according to an embodiment of the present application.
FIG. 2 is a cross-sectional view taken along line A-A in FIG. 1.
FIG. 3 is a cross-sectional view taken along line B-B in FIG. 1.
FIG. 4 is a schematic partial structural view of a clothes treatment apparatus according to an embodiment of the present application.
FIG. 5 is a schematic partial structural view of a clothes treatment apparatus according to an embodiment of the present application.
FIG. 6 is a cross-sectional view taken along line C-C in FIG. 5.
FIG. 7 is a cross-sectional view taken along line D-D in FIG. 5.
FIG. 8 is a schematic partial structural view of a clothes treatment apparatus according to an embodiment of the present application.
FIG. 9 is a partial cross-sectional view of a clothes treatment apparatus according to an embodiment of the present application.
FIG. 10 is a schematic partial structural view of a clothes treatment apparatus according to an embodiment of the present application.
FIG. 11 is a schematic partial structural view of a clothes treatment apparatus according to an embodiment of the present application.
FIG. 12 is a schematic structural view of an air guide cover according to an embodiment of the present application.
FIG. 13 is a schematic structural view of an air guide cover according to an embodiment of the present application.
FIG. 14 is a schematic structural view of an air guide cover according to an embodiment of the present application.

Reference numerals of the accompanying drawings:
clothes treatment drum 1, first air inlet region 11, second air inlet region 12, second air inlet opening 121, first cover body 2, second cover body 3, air guide cover 4, side wall 41, first ventilation hole 411, top 42, second ventilation hole 421, mounting portion 43, switching device 5, first plate portion 51, second plate portion 52, avoidance portion 53, drive member 54, fan 6, volute tongue 7, first air duct 10, inlet 101 of the first air duct, second air duct 20, inlet 201 of the second air duct, air inlet cavity 30.

### DETAILED DESCRIPTION OF THE EMBODIMENTS

Embodiments of the present application will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present application.

In the description of the present application, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise" should be construed to refer to the orientation or the position as shown in the drawings, and is only for the convenience of describing the present application and simplifying the description, rather than indicating or implying that the pointed device or element must have a specific orientation, or be constructed and operated in a specific orientation, and therefore cannot be understood as a limitation of the present application.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present application, "plurality" means at least two, unless otherwise specifically defined.

In the present application, unless expressly stipulated and defined otherwise, the first feature "on" or "under" the second feature may mean that the first feature is in direct contact with the second feature, or the first and second features are in indirect contact through another feature between them. Moreover, the first feature "above" the second feature means that the first feature is directly above or obliquely above the second feature, or simply means that the level of the first feature is higher than that of the second feature. The first feature "below" the second feature means that the first feature is directly below or obliquely below the second feature, or simply means that the level of the first feature is smaller than that of the second feature.

A clothes treatment apparatus according to the embodiments of the present application may be a dryer. In a process of clothes treatment, a dry airflow needs to be introduced into an inner cavity of a clothes treatment drum to dry clothes using the dry airflow.

In the related art, an airflow may flow through the inner cavity of the clothes treatment drum in one way, in such a manner that the airflow in the inner cavity of the clothes treatment drum is uneven, which leads to adhesion of clothes to a filter screen in a drying process. Also, when a flow rate of the airflow is slow and a direction of the airflow cannot be controlled, penetration of the airflow is unsatisfactory, and drying cannot be effectively realized in some regions, which influences clothes treatment performance of the clothes treatment apparatus, affecting use experience of a user.

To this end, according to the embodiments of the present application, a clothes treatment apparatus is designed, in which a drum bottom of a clothes treatment drum 1 is divided into two different air inlet regions for introducing a dry airflow into an inner cavity of the clothes treatment drum 1. By controlling whether the airflow is introduced through the two different air inlet regions, the inner cavity of the clothes treatment drum 1 can be controlled to provide different clothes treatment performance, which further enables the clothes treatment apparatus to select airflows having different drying performance to pass through clothes based on different states of the clothes, achieving better clothes treatment performance.

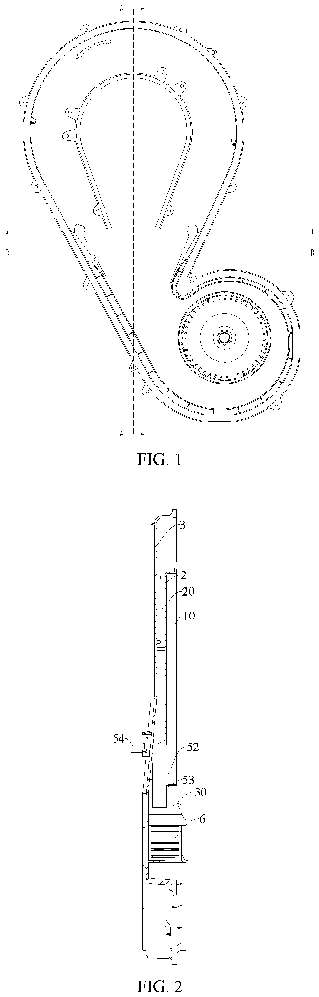

The clothes treatment apparatus according to the embodiments of the present application will be described below with reference to FIG. 1 to FIG. 14.

According to embodiments of the present application, the clothes treatment apparatus may include a housing, a clothes treatment drum 1, and an air duct casing assembly.

As illustrated in FIG. 1 to FIG. 8, the housing of the clothes treatment apparatus can protect an internal structure of the clothes treatment apparatus on an outer side of the clothes treatment apparatus to enable the clothes treatment apparatus to maintain a stable operation. The clothes treatment drum 1 is rotatably disposed inside the housing for receiving clothes to be treated. The clothes are treated in the inner cavity of the clothes treatment drum 1. The clothes treatment apparatus can dry the clothes through introducing the dry airflow into the inner cavity of the rotating clothes treatment drum 1. The housing can support and protect the clothes treatment drum 1 at an outer side of the clothes treatment drum 1.

The clothes treatment drum 1 has a first air inlet region 11 and a second air inlet region 12 at the drum bottom of the clothes treatment drum 1. The airflow may enter the inner cavity of the clothes treatment drum 1 through the first air inlet region 11 or the second air inlet region 12, or both the first air inlet region 11 and the second air inlet region 12.

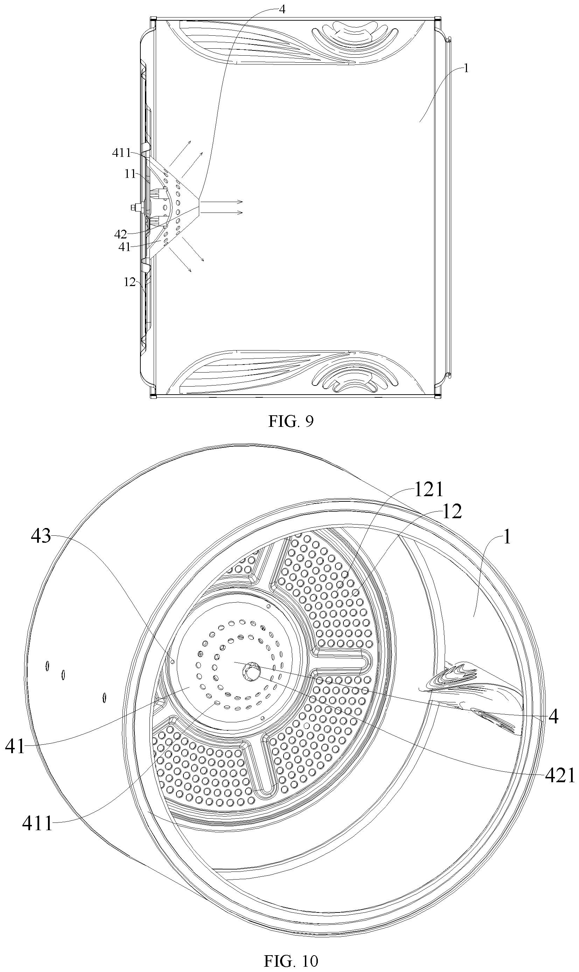

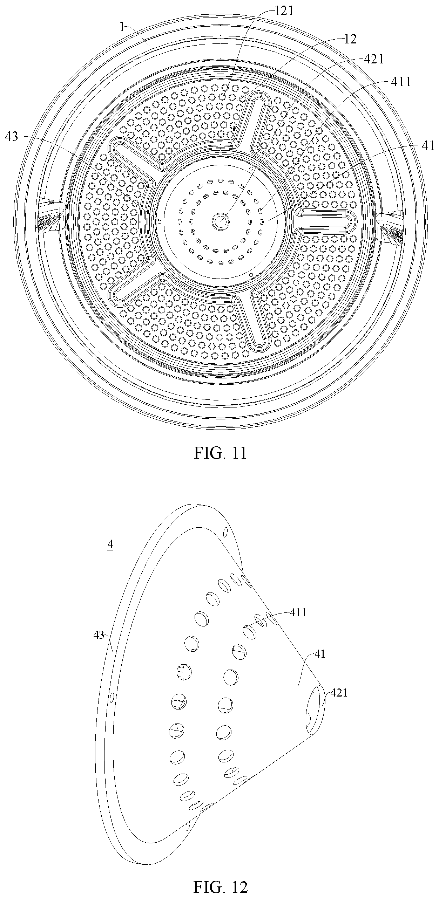

As illustrated in FIG. 10 and FIG. 11, the first air inlet region 11 is located at a center of the drum bottom, and the second air inlet region 12 surrounds the first air inlet region 11. In this way, not only is an arrangement of an air duct facilitated, but the airflow is enabled to be more concentrated when the airflow enters the inner cavity of the clothes treatment drum 1 only through the first air inlet region 11, allowing the airflow to have a faster flow rate and more powerful penetration. Therefore, the clothes treatment apparatus can quickly dry a part of the clothes which is difficult to be dried in a center region of the clothes, ensuring a reliable operation of a clothes drying function of the clothes treatment apparatus. When the airflow enters the clothes treatment drum 1 through both the first air inlet region 11 and the second air inlet region 12, the airflow is evenly distributed in all parts of the inner cavity of the clothes treatment drum 1, which enables the clothes in the clothes treating drum 1 to be evenly dried, ensuring a clothes drying effect of the clothes treatment apparatus.

Further, when the airflow enters the inner cavity of the clothes treatment drum 1 only through the first air inlet region 11 or the second air inlet region 12, the flow rate of the airflow is relatively fast, in such a manner that the airflow having the penetration can quickly dry the part of the clothes which is difficult to be dried, which ensures the reliable operation of the clothes drying function of the clothes treatment apparatus, further ensuring the clothes drying effect of the clothes treatment apparatus.

When the airflow enters the inner cavity of the clothes treatment drum 1 through both the first air inlet region 11 and the second air inlet region 12, the airflow in the clothes treatment drum 1 is even, which can dry the clothes in the inner cavity of the clothes treatment drum 1 as a whole. Also, since the airflow can evenly flow, the adhesion of the clothes to the filter screen in the drying process of the clothes treatment apparatus is avoided, improving the use experience of the user.

Further, the air duct casing assembly is disposed outside the housing. Two different air ducts including a first air duct 10 and a second air duct 20 are defined between air duct casing assembly and the housing. The first air duct 10 and the second air duct 20 are independent of each other and do not interfere with each other. When the airflow passes through one of the two air ducts, the airflow in the one of the two air ducts does not enter the other one of the two air ducts.

The first air duct 10 is in communication with the inner cavity of the clothes treatment drum 1 through the first air inlet region 11. The second air duct 20 is in communication with the inner cavity of the clothes treatment drum 1 through the second air inlet region 12. That is, the airflow entering the clothes treatment apparatus from an air inlet opening may enter the inner cavity of the clothes treatment drum 1 through the first air inlet region 11 after passing through the first air duct 10, and the airflow entering the clothes treatment apparatus from an air inlet opening may enter the inner cavity of the clothes treatment drum 1 through the second air inlet region 12 after passing through the second air duct 20. In this way, air inlet regions in the clothes treatment drum 1 can be controlled by controlling the air duct through which the airflow flows, realizing switching between different air flow modes in the inner cavity of the clothes treatment drum 1.

Specifically, the clothes treatment apparatus has a first ventilation mode and a second ventilation mode. In the first ventilation mode, the first air duct 10 is in communication with the inner cavity of the clothes treatment drum 1 through the first air inlet region 11. In this ventilation mode, the flow rate of the airflow is relatively fast, in such a manner that the airflow having the penetration can quickly dry the part of the clothes which is difficult to be dried, which ensures the reliable operation of the clothes drying function of the clothes treatment apparatus, further ensuring the clothes drying effect of the clothes treatment apparatus.

In the second ventilation mode, the first air duct 10 is in communication with the inner cavity of the clothes treatment drum 1 through the first air inlet region 11 and the second air duct 20 is in communication with the inner cavity of the clothes treatment drum 1 through the second air inlet region 12. In this ventilation mode, the airflow in the clothes treatment drum 1 is even, which can dry the clothes in the inner cavity of the clothes treatment drum 1 as a whole. Also, since the airflow can evenly flow, the adhesion of the clothes to the filter screen in the drying process of the clothes treatment apparatus is avoided, improving the use experience of the user.

According to the embodiments of the present application, the clothes treatment apparatus is switchable between different ventilation modes, and realizes different clothes drying effects through the switching between the ventilation modes, which ensures the clothes drying effect of the clothes treatment apparatus and enhances the clothes treatment performance of the clothes treatment apparatus, improving the use experience of the user.

As illustrated in FIG. 10 and FIG. 11, the drum bottom is provided with an air guide cover 4 at an inner side of the drum bottom of the clothes treatment drum 1. The air guide cover 4 can guide the airflow passing through the air guide cover 4, in such a manner that the airflow flows in different directions to achieve different clothes treatment performance.

The air guide cover 4 is disposed at an inner side of a bottom wall of the clothes treatment drum 1 to guide the airflow flowing out from the inner side of the bottom wall of the clothes treatment drum 1. The air guide cover 4 covers the first air inlet region 11, in such a manner that the first air inlet region 11 may be in communication with the inner cavity of the clothes treatment drum 1 through the air guide cover 4. That is, the airflow in the first air duct 10 enters the air guide cover 4 through the first air inlet region 11 and enters the inner cavity of the clothes treatment drum 1 through the air guide cover 4. In this process, the airflow may be guided by the air guide cover 4 to enable the airflow to achieve different clothes treatment performance.

The air guide cover 4 has a plurality of ventilation holes. The first air duct 10 is in communication with the inner cavity of the clothes treatment drum 1 through the plurality of ventilation holes. That is, the airflow in the first air duct 10 enters the air guide cover 4 through the first air inlet region 11, and then enters the inner cavity of the clothes treatment drum 1 through the plurality of ventilation holes formed at the air guide cover 4. In this process, the airflow is guided by the air guide cover 4, which enables the airflow to flow in different directions, realizing different clothes treatment performance.

As illustrated in FIG. 9, the air guide cover 4 protrudes from an inner surface of the bottom wall of the clothes treatment drum 1. The air guide cover 4 that protrudes from the inner surface of the bottom wall of the clothes treatment drum 1 may guide the airflow to surroundings, which enables the airflow to circulate everywhere inside the clothes treatment drum 1.

Further, the air guide cover 4 has a circumferential wall and a top wall. Optionally, as illustrated in FIG. 12, the plurality of ventilation holes are formed at the circumferential wall of the air guide cover 4 and/or the top wall of the air guide cover 4. In this case, the plurality of ventilation holes at the top wall may guide the airflow to front, and the plurality of ventilation holes at the circumferential wall may guide the airflow to the surroundings. In this case, the airflow circulates everywhere inside the clothes treatment drum 1.

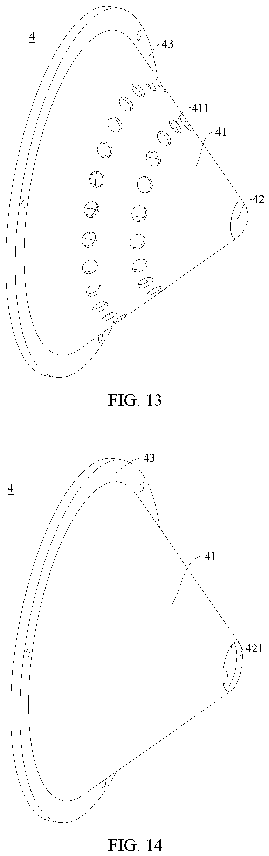

Further, as illustrated in FIG. 13, the plurality of ventilation holes are formed at the circumferential wall of the air guide cover 4, while no ventilation holes are formed at the top wall of the air guide cover 4. In this case, the plurality of ventilation holes at the circumferential wall can guide the airflow to the surroundings.

In other embodiments, as illustrated in FIG. 14, the plurality of ventilation holes are formed at the top wall of the air guide cover 4, while no ventilation holes are formed at the circumferential wall of the air guide cover 4. In this case, the plurality of ventilation holes at the top wall can guide the airflow to the front.

In summary, by selecting different air guide cover 4, the airflow can be guided to flow in different directions, which can realize different air guide effects, achieving different clothes treatment performance, and further improving the clothes treatment performance of the clothes treatment apparatus.

In some alternative embodiments, the plurality of ventilation holes may be formed at the circumferential wall of the air guide cover 4 and the top wall of the air guide cover 4 in a form of being exposed or covered. When all the ventilation holes at the circumferential wall of the air guide cover 4 and the top wall of the air guide cover 4 are exposed, the ventilation holes at the top wall may guide the airflow to the front, and the ventilation holes at the circumferential wall may guide the airflow to the surroundings. In this case, the airflow circulates everywhere inside the clothes treatment drum 1.

When the ventilation holes at the circumferential wall of the air guide cover 4 are exposed and the ventilation holes at the top wall of the air guide cover 4 is covered, the ventilation holes at the circumferential wall may guide the airflow to the surroundings.

When the ventilation holes at the top wall of the air guide cover 4 are exposed and the ventilation holes at the circumferential wall of the air guide cover 4 are covered, the ventilation holes at the top wall may guide the airflow to the front.

In summary, by controlling the ventilation holes at the air guide cover 4 to be exposed or covered, the air guide cover 4 can have different air guide effects, which can allow the airflow to flow in different directions, achieving different clothes treatment performance, and further improving the clothes treatment performance of the clothes treatment apparatus.

In combination with embodiments illustrated in FIG. 11 to FIG. 14, the air guide cover 4 is formed into a conical cover, which enables the air guide cover 4 to guide the airflow in different directions, in such a manner that the airflow has orientations of different angles. Also, since the conical cover has a concentration effect, air passing through a center ventilation hole of the conical cover has an increased flow rate and more powerful penetration. Therefore, the airflow may flow to a position farther away from the bottom wall of the clothes treatment drum 1, which can achieve better clothes treatment performance.

As illustrated in FIG. 9 to FIG. 14, the plurality of ventilation holes include a plurality of first ventilation holes 411 arranged at intervals on a side wall 41 of the conical cover in a circumferential direction of the conical cover and/or an axial direction of the conical cover. The first ventilation holes 411 arranged at intervals in the circumferential direction of the conical cover and/or the axial direction of the conical cover may guide the airflow to the surroundings.

The plurality of ventilation holes include a second ventilation hole 421 formed on a top 42 of the conical cover. The second ventilation hole 421 formed at the top 42 of the conical cover may guide the airflow to the front.

In some embodiments, as illustrated in FIG. 12, the conical cover has first ventilation holes 411 arranged at intervals on the side wall 41 of the conical cover in the circumferential direction of the conical cover and/or the axial direction of the conical cover and a second ventilation hole 421 formed at the top 42 of the conical cover. The first ventilation holes 411 may guide the airflow to the surroundings, while the second ventilation hole 421 may guide the airflow to the front. In this case, the airflow circulates everywhere inside the clothes treatment drum 1.

In other embodiments, as illustrated in FIG. 13, the conical cover has first ventilation holes 411 arranged at intervals on the side wall 41 of the conical cover in the circumferential direction of the conical cover and/or the axial direction of the conical cover, and no ventilation holes are formed at the top 42 of the conical cover. In this case, the first ventilation holes 411 may guide the airflow to the surroundings.

In yet other embodiments, as illustrated in FIG. 14, the conical cover has a second ventilation hole 421 formed at the top 42 of the conical cover, and no ventilation holes are formed at the side wall 41 of the conical cover. In this case, the second ventilation hole may guide the airflow to the front.

In summary, by selecting different conical cover, the airflow can be guided to flow in different directions, which can realize different air guide effects, achieving different clothes treatment performance, and further improving the clothes treatment performance of the clothes treatment apparatus.

In some alternative embodiments, the first ventilation holes 411 and the second ventilation hole 421 may be formed at the side wall 41 of the conical cover and the top 42 of the conical cover in a form of being exposed or covered. When all the first ventilation holes 411 and the second ventilation hole 421 are exposed, the second ventilation hole 421 may guide the airflow to the front, and the first ventilation holes 411 may guide the airflow to the surroundings. In this case, the airflow circulates everywhere inside the clothes treatment drum 1.

When the first ventilation holes 411 formed at the side wall 41 of the conical cover are exposed while the second ventilation hole 421 formed at the top 42 of the conical cover is covered, the first ventilation holes located at the side wall 41 of the conical cover may guide the airflow to the surroundings.

When the second ventilation hole 421 formed at the top 42 of the conical cover is exposed while the first ventilation holes 411 formed at the side wall 41 of the conical cover are covered, the second ventilation hole 421 located at the top 42 of the conical cover may guide the airflow to the front.

In summary, by controlling the first ventilation holes 411 and the second ventilation hole 421 at the conical cover to be exposed or covered, the conical cover can have different air guide effects, which can allow the airflow to flow in different directions, achieving different clothes treatment performance, and further improving the clothes treatment performance of the clothes treatment apparatus.

In combination with embodiments illustrated in FIG. 9 to FIG. 14, the air guide cover 4 further includes a mounting portion 43. The air guide cover 4 is mounted at the bottom wall of the clothes treatment drum 1 through the mounting portion 43, which enables the air guide cover 4 to be stably disposed in the clothes treatment apparatus, ensuring stability of mounting of the air guide cover 4.

In some embodiments, the air guide cover 4 is detachably mounted at the bottom wall of the clothes treatment drum 1 by the mounting portion 43 to facilitate a replacement of the air guide cover 4, which facilitates a realization of different air guide effects through replacing the air guide cover 4.

Optionally, the air guide cover 4 is engaged with and fixed to the bottom wall of the clothes treatment drum 1 by the mounting portion 43.

In other embodiments, the air guide cover 4 is fixedly mounted at the bottom wall of the clothes treatment drum 1 by the mounting portion 43.

Further, the first air inlet region 11 has a plurality of first air inlet holes. The first air duct 10 is in communication with the inner cavity of the clothes treatment drum 1 through the plurality of first air inlet holes. That is, the airflow in the first air duct 10 may enter the clothes treatment drum 1 through the first air inlet opening formed at the first air inlet region 11 on the bottom wall of the clothes treatment drum 1.

The second air inlet region 12 has a plurality of second air inlet holes. The second air duct 20 is in communication with the inner cavity of the clothes treatment drum 1 through the plurality of second air inlet holes. That is, the airflow in the second air duct 20 may enter the inner cavity of the clothes treatment drum 1 through a second air inlet opening 121 formed at the second air inlet region 12 on the bottom wall of the clothes treatment drum 1.

According to some embodiments of the present application, the plurality of first air inlet holes are arranged at intervals in a circumferential direction of a circle. Therefore, for the clothes treatment apparatus, the flow rate of the airflow entering the clothes treatment drum 1 through the first air inlet opening is even, which makes flow performance of the airflow in the clothes treatment drum 1 better.

Each of the plurality of first air inlet holes is formed into an elongated hole extending in the circumferential direction of the circle, which makes an air outlet area of the first air inlet opening larger. Therefore, a flow volume of the airflow entering the clothes treatment drum 1 through the first air inlet region 11 is larger, which improves the clothes treatment performance of the clothes treatment apparatus.

As illustrated in FIG. 10 and FIG. 11, the plurality of second air inlet holes are arranged at intervals in a circumferential direction of the first air inlet region 11 and/or a radial direction of the first air inlet region 11. Therefore, for the clothes treatment apparatus, the flow rate of the airflow entering the clothes treatment drum 1 through the second air inlet opening 121 is even, which makes the flow performance of the airflow in the clothes treatment apparatus 1 better.

A flow cross-sectional area of the plurality of second air inlet holes is smaller than a flow cross-sectional area of the plurality of first air inlet holes. Therefore, the flow volume of the airflow entering the clothes treatment drum 1 through the first air inlet region 11 is larger than the flow volume of the airflow entering the clothes treatment drum 1 through the second air inlet region 12, which enables more air to be guided by the air guide cover 4, improving the clothes treatment performance of the clothes treatment apparatus.

According to some embodiments of the present application, the clothes treatment apparatus further includes a first seal and a second seal. The first seal is disposed between the housing and the drum bottom. A first transition cavity is defined by the first seal, the housing, and the drum bottom. The plurality of first air inlet holes are in communication with the first air duct 10 through the first transition cavity. The second seal is disposed between the housing and the drum bottom. A second transition cavity is defined by the first seal, the second seal, the housing, and the drum bottom. The plurality of second air inlet holes are in communication with the second air duct 20 through the second transition cavity. With the first seal and the second seal, sealing performance of the air duct can be ensured, which reduces an air volume loss as much as possible, improving the use experience of the clothes treatment apparatus.

As illustrated in FIG. 1 to FIG. 8, air duct casing assembly includes a first cover body 2 and a second cover body 3. The first cover body 2 and the second cover body 3 are disposed outside the housing. The first air duct 10 is defined between the first cover body 2 and the housing. The second cover body 3 covers an outer side of the first cover body 2. The second air duct 20 is defined by the second cover body 3, the first cover body 2, and the housing. That is, the second cover body 3 covers the outer side of the first cover body 2. A space is formed at an inner side of the first cover body 2 for the airflow to pass through. Also, a space is formed between the first cover body 2 and the second cover body 3 for the airflow to pass through. Moreover, in some embodiments, the two spaces are independent of each other. That is, the airflows passing through the two spaces do not interfere with each other.

That is, the first air duct 10 and the second air duct 20 are independent of each other and do not interfere with each other. When the airflow passes through one of the two air ducts, the airflow in the one of the two air ducts does not enter into the other one of the two air ducts. In this way, a pressure of the airflow can be increased. For example, the airflow enters the first air duct 10, and the airflow entering the first air duct 10 dose not enter the second air duct 20, which can avoid a decrease of a pressure of the airflow in the first air duct 10, which would reduce a blowing force on the clothes.

The air inlet opening is in communication with the inner cavity of the clothes treatment drum 1 through each of the first air duct 10 and the second air duct 20. That is, air enters the housing through the air inlet opening and is formed into the airflow. The airflow may enter the inner cavity of the clothes treatment drum 1 through the first air duct 10 or the second air duct 20.

An air inlet cavity 30 is defined between the second cover body 3 and the housing. The air inlet cavity 30 is in communication with an inlet 101 of the first air duct 10 and an inlet 201 of the second air duct 20. That is, the air inlet cavity 30 is adapted to be in communication with and located between the inlet 101 of the first air duct 10 and the air inlet opening and in communication with and located between the inlet 201 of the second air duct 20 and the air inlet opening. The airflow entering the clothes treatment apparatus from the air inlet opening enters the air inlet cavity 30, reaches vicinity of the inlet 101 of the first air duct 10 and the inlet 201 of the second air duct 20 through the air inlet cavity 30, and then enters the inner cavity of the clothes treatment drum 1 through the first air duct 10 and/or the second air duct 20.

As illustrated in FIG. 1 to FIG. 8, the clothes treatment apparatus further includes a switching device 5. The switching device 5 is configured to expose or cover the inlet 201 of the second air duct 20, to control a flowing or an interruption of an airflow between the second air duct 20 and the air inlet cavity 30.

Specifically, the switching device 5 may expose or cover the inlet 201 of the second air duct 20. When the switching device 5 exposes the inlet 201 of the second air duct 20, the airflow may enter the second air duct 20 through the inlet 201 of the second air duct 20 and enter the inner cavity of the clothes treatment drum 1 through the second air duct 20. That is, when the switching device 5 exposes the inlet 201 of the second air duct 20, the airflow entering the housing through the air inlet may enter the inner cavity of the clothes treatment drum 1 through both the first air duct 10 and the second air duct 20. In this case, since the two air ducts in the clothes treatment apparatus can be provided for circulation of the airflow, the flow rate of the airflow is relatively slow under a condition of a constant airflow volume.

Further, when the switching device 5 covers the inlet 201 of the second air duct 20, the airflow is unable to enter the second air duct 20 through the inlet 201 of the second air duct 20, and is therefore unable to enter the inner cavity of the clothes treatment drum 1 through the second air duct 20. That is, when the switching device 5 covers the inlet 201 of the second air duct 20, the airflow entering the housing through the air inlet opening may enter the inner cavity of the clothes treatment drum 1 only through the first air duct 10. In this case, since only one air duct in the clothes treatment apparatus can be provided for the circulation of the airflow, the flow rate of the airflow is relatively fast under the condition of the constant airflow volume.

That is, the switching device 5 controls the flowing or the interruption of the airflow between the second air duct 20 and the air inlet opening through exposing or covering the inlet 201 of the second air duct 20, in such a manner that the airflow has different flow paths. Therefore, the clothes treatment apparatus can switch between different ventilation modes, and change the flow rate and the flow volume of the airflow in a switching process, to achieve a purpose of better adjusting the flow rate and the flow volume of the airflow introduced into a clothes treatment cavity.

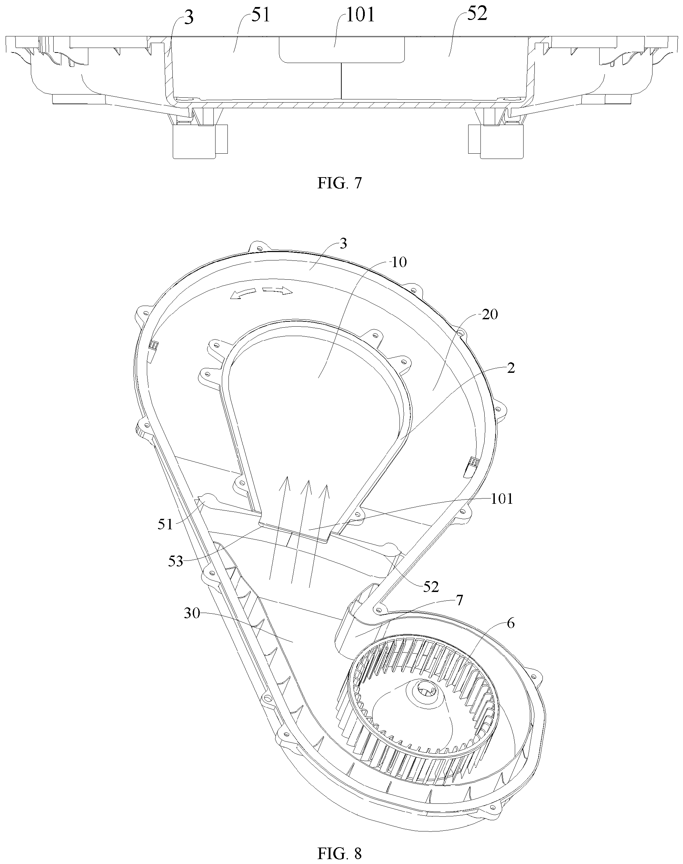

As illustrated in FIG. 7 and FIG. 8, the switching device 5 includes at least one switching plate. The switching plate can block flow of the airflow to achieve an isolation of the air duct. The switching plate is swingably disposed in the second cover body 3. The switching plate can be configured to swing to a position at which the airflow is blocked from flowing into the second air duct 20 or a position at which the airflow is not blocked from flowing into the second air duct 20. That is, the switching device 5 realizes switching between an open state and a closed state through swinging of the switching plate.

Further, in the closed state, the switching plate covers the inlet 201 of the second air duct 20 to isolate the air inlet from the second air duct 20. In this case, the airflow is unable to enter the second air duct 20 through the inlet 201 of the second air duct 20, and is therefore unable to enter the inner cavity of the clothes treatment drum 1 through the second air duct 20. That is, when the switching device 5 covers the inlet 201 of the second air duct 20, the airflow entering the housing through the air inlet opening may enter the inner cavity of the clothes treatment drum 1 only through the first air duct 10. In this case, since only one air duct in the clothes treatment apparatus can be provided for the circulation of the airflow, the flow rate of the airflow is relatively fast under the condition of the constant airflow volume.

In the open state, the switching plate exposes the inlet 201 of the second air duct 20 to enable the air inlet opening to be in communication with the second air duct 20. Therefore, the airflow may enter the second air duct 20 through the inlet 201 of the second air duct 20 and enter the inner cavity of the clothes treatment drum 1 through the second air duct 20. That is, when the switching device 5 exposes the inlet 201 of the second air duct 20, the airflow entering the housing through the air inlet opening may enter the inner cavity of the clothes treatment drum 1 through both the first air duct 10 and the second air duct 20. In this case, since the two air ducts in the clothes treatment apparatus can be provided for the circulation of the airflow, the flow rate of the airflow is relatively slow under the condition of the constant airflow volume.

That is, by controlling the switching plate to be located at different positions, the inlet 201 of the second air duct 20 can be controlled to be exposed or covered, in such a manner that the airflow is controlled to change the flow path. Therefore, the clothes treatment apparatus can switch between different ventilation modes, and change the flow rate and the flow volume of the airflow in the switching process, to achieve the purpose of better adjusting the flow rate and the flow volume of the airflow introduced into the clothes treatment cavity.

As illustrated in FIG. 7 and FIG. 8, the switching plate includes an avoidance portion 53. An arrangement of the avoidance portion 53 can prevent an arrangement of the switching plate from affecting ventilation performance of the first air duct 10. The switching plate may cover the inlet 201 of the second air duct 20 when the switching device 5 is in the closed state. The avoidance portion 53 may avoid the inlet 101 of the first air duct 10 when the switching device 5 is in the closed state. In this way, the first air duct 10 is ensured to be maintained in a satisfactory ventilation state, which prevents the ventilation performance of the inlet 101 of the first air duct 10 from being affected when the switching plate covers the inlet 201 of the second air duct 20.

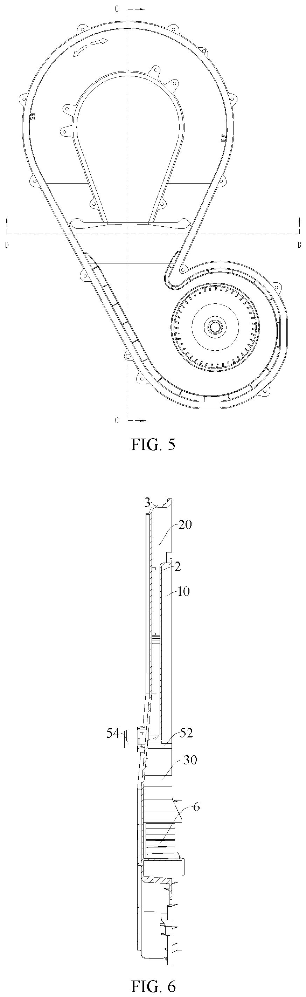

As illustrated in FIG. 2 and FIG. 6, the switching device 5 further includes a drive member 54 that can provide power for a movement of the switching device 5. The drive member 54 is connected to the switching plate for driving the switching plate to swing.

In some embodiments, the drive member 54 may be a motor. The motor has a motor shaft connected to the switching plate. The switching plate is driven to swing through a rotation of the motor shaft. Therefore, by controlling an operation of the motor, a position of the switching plate can be controlled, in such a manner that the switching device 5 can be controlled to be switchable between the open state and the closed state, controlling the airflow to change the flow path. Therefore, the clothes treatment apparatus can switch between different ventilation modes, and change the flow rate and the flow volume of the airflow in the switching process, to achieve the purpose of better adjusting the flow rate and the flow volume of the airflow introduced into the clothes treatment cavity.

In combination with embodiments illustrated in FIG. 1 to FIG. 8, the first cover body 2 is located at a center of the second cover body 3. Therefore, an overall structure of the clothes treatment apparatus is more reasonable, which enables widths of the second air duct 20 at two sides of the second air duct 20 to be similar, making the ventilation performance evener.

Further, two switching plates are provided, which are a first plate portion 51 and a second plate portion 52, to jointly control the inlet 201 of the second air duct 20 to be exposed or covered at two sides, which makes control performance better. Also, the arrangement of the switching plate can be prevented from occupying more mounting space, which makes the overall structure more reasonable. Further, a rotation shaft of the first plate portion 51 and a rotation shaft of the second plate portion 52 are located at two opposite sides of the second cover body 3, which makes a structure of the second cover body 3 evener. Therefore, wind resistances at the two sides of the second cover body 3 are ensured to be the same, which enables an air volume in the second air duct 20 to be evener.

Optionally, one switching plate may be provided to reduce the number of drive members 54, making the overall structure more concise.

The switching device 5 may be disposed at a connection between the second air duct 20 and a flow passage channel.

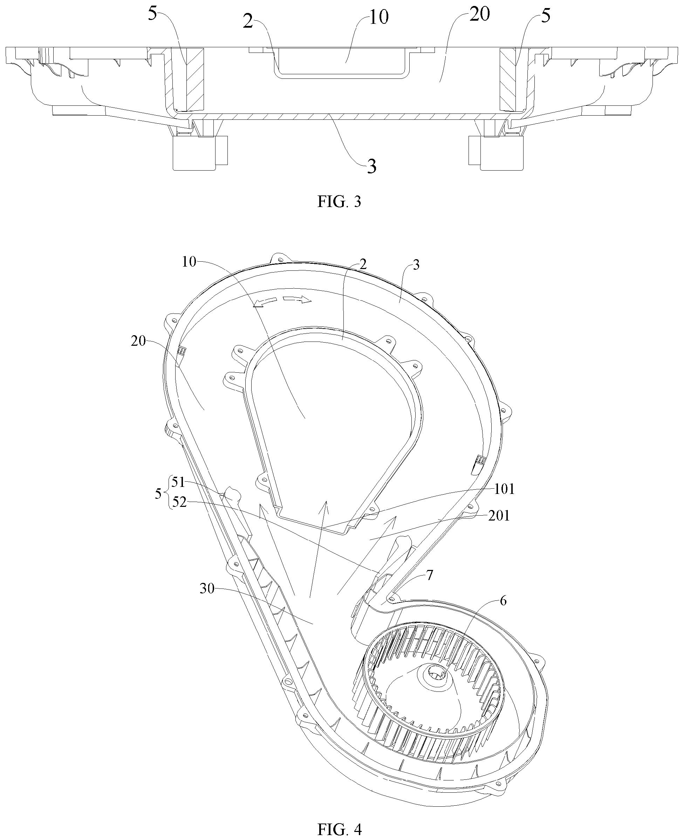

As illustrated in FIG. 4 and FIG. 8, a fan 6 is further disposed in the flow passage channel. The fan 6 can provide power for the flow of the airflow, which enables continuous flow of the airflow within the clothes treatment apparatus into the inner cavity of the clothes treatment drum 1.

The second cover body 3 may further be provided with a volute tongue 7 at an inner wall of the second cover body 3. The volute tongue 7 is located between the fan 6 and the first air duct 10/the inlet 201 of the second air duct 20 to improve gas flow performance in the air duct.

A specific embodiment of the clothes treatment apparatus will be described below with reference to the accompanying drawings.

The clothes treatment apparatus according to the embodiment of the present application may be the dryer. The dryer includes a housing, a clothes treatment drum 1, a first cover body 2, a second cover body 3, a switching device 5, an air guide cover 4, and a fan 6.

The clothes treatment drum 1 is disposed in the housing and configured to treat clothes to be treated. The clothes are treated in the inner cavity of the clothes treatment drum 1. An air inlet opening is formed at the housing. The second cover body 3 is disposed outside the housing. A predetermined space is formed between the second cover body 3 and the housing. The first cover body 2 and the fan 6 are disposed in the space formed between the second cover body 3 and the housing. The fan 6 is disposed at a part of the space formed between the second cover body 3 and the housing close to the air inlet opening, in such a manner that the airflow can be formed in the space formed by the second cover body 3 and the housing. The formed airflow flows towards the inner cavity of the clothes treatment drum 1 along the air inlet cavity 30 defined between the second cover body 3 and the housing.

The first cover body 2 is disposed inside the second cover body 3 between the housing and the second cover body 3. In this way, the second cover body 3, the first cover body 2, and the housing together form two air ducts at an inner side and an outer side, respectively. A first air duct 10 is defined between the first cover body 2 and the housing. A second air duct 20 is defined by the second cover body 3, the first cover body 2, and the housing. The air inlet cavity 30 may be in communication with the inner cavity of the clothes treatment drum 1 through the first air duct 10 and the second air duct 20.

The switching device 5 is disposed at a connection between the second air duct 20 and the air inlet cavity 30 and includes a motor, a first plate portion 51, and a second plate portion 52. An end of the first plate portion 51 and an end of the second plate portion 52 are rotatably connected to two sides of the second cover body 3, and may be driven by the motor to swing in the second cover body 3. The switching device 5 realizes switching between the open state and the closed state through swinging of the first plate portion 51 and the second plate portion 52.

In the closed state, the first plate portion 51 and the second plate portion 52 cover the inlet 201 of the second air duct 20 to isolate the air inlet opening from the second air duct 20. In this case, the airflow is unable to enter the second air duct 20 through the inlet 201 of the second air duct 20, and is therefore unable to enter the inner cavity of the clothes treatment drum 1 through the second air duct 20. That is, when the switching device 5 covers the inlet 201 of the second air duct 20, the airflow entering the housing through the air inlet opening may enter the inner cavity of the clothes treatment drum 1 only through the first air duct 10. In this case, since only one air duct in the clothes treatment apparatus can be provided for the circulation of the airflow, the flow rate of the airflow is relatively fast under the condition of the constant airflow volume.

In the open state, the first plate portion 51 and the second plate portion 52 exposes the inlet 201 of the second air duct 20 to enable the air inlet opening to be in communication with the second air duct 20. Therefore, the airflow may enter the second air duct 20 through the inlet 201 of the second air duct 20 and enter the inner cavity of the clothes treatment drum 1 through the second air duct 20. That is, when the switching device 5 exposes the inlet 201 of the second air duct 20, the airflow entering the housing through the air inlet opening may enter the inner cavity of the clothes treatment drum 1 through the first air duct 10 and the second air duct 20 simultaneously. In this case, since the two air ducts in the clothes treatment apparatus can be provided for the circulation of the airflow, the flow rate of the airflow is relatively slow under the condition of the constant airflow volume.

That is, by controlling the first plate portion 51 and the second plate portion 52 to be located at different positions by the motor, the inlet 201 of the second air duct 20 can be controlled to be exposed or covered, in such a manner that the airflow is controlled to change the flow path. Therefore, the clothes treatment apparatus can switch between different ventilation modes, and change the flow rate and the flow volume of the airflow in the switching process, to achieve the purpose of better adjusting the flow rate and the flow volume of the airflow introduced into the inner cavity of the clothes treatment drum.

The clothes treatment drum 1 has a first air inlet region 11 and a second air inlet region 12 at the bottom wall of the clothes treatment drum 1. The first air inlet region 11 is located at a center of the bottom wall of the clothes treatment drum 1. The second air inlet region 12 surrounds the first air inlet region 11. The first air inlet region 11 has a first air inlet opening. The second air inlet region 12 has a second air inlet opening 121.

Further, when the airflow enters the inner cavity of the clothes treatment drum 1 only through the first air inlet region 11 or the second air inlet region 12, the flow rate of the airflow is relatively fast, in such a manner that the airflow having the penetration can quickly dry the part of the clothes which is difficult to be dried, which ensures the reliable operation of the clothes drying function of the clothes treatment apparatus, further ensuring the clothes drying effect of the clothes treatment apparatus.

When the airflow enters the inner cavity of the clothes treatment drum 1 through both the first air inlet region 11 and the second air inlet region 12, the airflow in the clothes treatment drum 1 is even, which can dry the clothes in the inner cavity of the clothes treatment drum 1 as a whole. Also, since the airflow can evenly flow, the adhesion of the clothes to the filter screen in the drying process of the clothes treatment apparatus is avoided, improving the use experience of the user.

In some embodiments, the first air inlet opening is in communication with the first air duct 10, and the second air inlet opening 121 is in communication with the second air duct 20.

The air guide cover 4 is disposed at an inner side of the first air inlet region 11 at the bottom wall of the clothes treatment drum 1. The air guide cover 4 is formed into the conical cover. The conical cover has a plurality of ventilation holes.

In some embodiments, a plurality of conical covers are provided. The plurality of conical covers are detachably mounted at the bottom wall of the clothes treatment drum 1 by the mounting portion 43. By mounting different conical covers, different air guide effects can be realized, further realizing different clothes treatment performance.

One of the plurality of conical covers has first ventilation holes 411 arranged at intervals on the side wall 41 of the conical cover in the circumferential direction of the conical cover and/or the axial direction of the conical cover, and a second ventilation hole 421 formed at the top 42 of the conical cover. The first ventilation holes 411 may guide the airflow to the surroundings. The second ventilation hole 421 may guide the airflow to the front. In this case, the airflow circulates everywhere inside the clothes treatment drum 1.

One of the plurality of conical covers has first ventilation holes 411 arranged at intervals on the side wall 41 of the conical cover in the circumferential direction of the conical cover and/or the axial direction of the conical cover, and no ventilation holes is formed at the top 42 of the conical cover. In this case, the first ventilation holes may guide the airflow to the surroundings.

One of the plurality of conical covers has a second ventilation hole 421 formed at the top 42 of the conical cover, and no ventilation hole is formed at the side wall 41 of the conical cover. In this case, the second ventilation hole may guide the airflow to the front.

In summary, by selecting different conical covers, the airflow can be guided to flow in different directions, which can realize different air guide effects, achieving different clothes treatment performance, and further improving the clothes treatment performance of the clothes treatment apparatus.

In other alternative embodiments, the first ventilation holes 411 and the second ventilation hole 421 may be formed at the side wall 41 of the conical cover and the top 42 of the conical cover in a form of being exposed or covered. When all the first ventilation holes 411 and the second ventilation hole 421 are exposed, the second ventilation hole 421 may guide the airflow to the front, and the first ventilation holes 411 may guide the airflow to the surroundings. In this case, the airflow circulates everywhere inside the clothes treatment drum 1.

When the first ventilation holes 411 formed at the side wall 41 of the conical cover are exposed while the second ventilation hole 421 formed at the top 42 of the conical cover is covered, the first ventilation holes located at the side wall 41 of the conical cover may guide the airflow to the surroundings.

When the second ventilation hole 421 formed at the top 42 of the conical cover is exposed while the first ventilation holes 411 formed at the side wall 41 of the conical cover are covered, the second ventilation hole 421 located at the top 42 of the conical cover may guide the airflow to the front.

In summary, by controlling the first ventilation holes 411 and the second ventilation hole 421 at the conical cover to be exposed or covered, the conical cover can have different air guide effects, which can allow the airflow to flow in different directions, achieving different clothes treatment performance, and further improving the clothes treatment performance of the clothes treatment apparatus.

Further, when the inlet 201 of the second air duct 20 is covered by the switching device 5, the airflow entering the housing through the air inlet opening may enter the inner cavity of the clothes treatment drum 1 only through the first air duct 10. In this case, the conical cover may guide the airflow entering the clothes treatment drum 1 from the first air inlet opening to the surroundings of the inner cavity of the clothes treatment drum 1, which avoids a disadvantage that no airflow flows at an edge of the inner cavity of the clothes treatment drum 1 due to a lack of air from the second air inlet opening 121, improving the clothes treatment performance of the clothes treatment apparatus.

Reference throughout this specification to "an embodiment", "some embodiments", "an example", "a specific example", or "some examples" means that a particular feature, structure, material, or characteristic described in connection with the embodiment or example is included in at least one embodiment or example of the present application. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples described in the specification may be combined by those skilled in the art.

Although embodiments of the present application have been illustrated and described above, it should be understood that the above embodiments are merely exemplary, and cannot be construed to limit the present application. For those skilled in the art, changes, alternatives, and modifications can be made to the embodiments without departing from the scope of the present application.

## Claims

1. A clothes treatment apparatus, comprising:
a housing;
a clothes treatment drum rotatably disposed in the housing, the clothes treatment drum having a first air inlet region and a second air inlet region that are disposed at a drum bottom of the clothes treatment drum, the first air inlet region being located at a center of the drum bottom, and the second air inlet region surrounding the first air inlet region; and
an air duct casing assembly, a first air duct and a second air duct being defined between air duct casing assembly and the housing,
wherein the clothes treatment apparatus has a first ventilation mode and a second ventilation mode,
in the first ventilation mode, the first air duct is in communication with an inner cavity of the clothes treatment drum through the first air inlet region; and
in the second ventilation mode, the first air duct is in communication with the inner cavity of the clothes treatment drum through the first air inlet region, and the second air duct is in communication with the inner cavity of the clothes treatment drum through the second air inlet region.

2. The clothes treatment apparatus according to claim 1, wherein the drum bottom is provided with an air guide cover at an inner side of the drum bottom, the air guide cover covering the first air inlet region and having a plurality of ventilation holes, and the first air duct being in communication with the inner cavity of the clothes treatment drum through the plurality of ventilation holes.

3. The clothes treatment apparatus according to claim 2, wherein the air guide cover protrudes from an inner surface of the drum bottom and has a circumferential wall and a top wall, the plurality of ventilation holes being formed at the circumferential wall of the air guide cover and/or the top wall of the air guide cover.

4. The clothes treatment apparatus according to claim 2, wherein the air guide cover is formed into a conical cover.

5. The clothes treatment apparatus according to claim 4, wherein:
the plurality of ventilation holes comprises a plurality of first ventilation holes arranged at intervals on a side wall of the conical cover in a circumferential direction of the conical cover and/or an axial direction of the conical cover; and/or
the plurality of ventilation holes comprises a second ventilation hole formed on a top of the conical cover.

6. The clothes treatment apparatus according to claim 1, wherein:
the first air inlet region has a plurality of first air inlet holes, the first air duct being in communication with the inner cavity of the clothes treatment drum through the plurality of first air inlet holes; and
the second air inlet region has a plurality of second air inlet holes, the second air duct being in communication with the inner cavity of the clothes treatment drum through the plurality of second air inlet holes.

7. The clothes treatment apparatus according to claim 6, wherein the plurality of first air inlet holes are arranged at intervals in a circumferential direction of a circle, wherein each of the plurality of first air inlet holes is formed into an elongated hole extending in the circumferential direction of the circle.

8. The clothes treatment apparatus according to claim 6, wherein the plurality of second air inlet holes are arranged at intervals in a circumferential direction of the first air inlet region and/or a radial direction of the first air inlet region, a flow cross-sectional area of the plurality of second air inlet holes being smaller than a flow cross-sectional area of the plurality of first air inlet holes.

9. The clothes treatment apparatus according to claim 6, wherein a flow cross-sectional area of the plurality of second air inlet holes is smaller than a flow cross-sectional area of the plurality of first air inlet holes.

10. The clothes treatment apparatus according to claim 6, further comprising:
a first seal disposed between the housing and the drum bottom, wherein a first transition cavity is defined by the first seal, the housing, and the drum bottom, the plurality of first air inlet holes being in communication with the first air duct through the first transition cavity; and
a second seal disposed between the housing and the drum bottom, wherein a second transition cavity is defined by the first seal, the second seal, the housing, and the drum bottom, the plurality of second air inlet holes being in communication with the second air duct through the second transition cavity.

11. The clothes treatment apparatus according to any one of claims 1 to 10, wherein air duct casing assembly comprises:
a first cover body disposed outside the housing, the first air duct being defined between the housing and the first cover body; and
a second cover body covering an outer side of the first cover body, the second air duct being defined by the second cover body, the first cover body, and the housing,
wherein an air inlet cavity is defined between the second cover body and the housing, the air inlet cavity being in communication with an inlet of the first air duct and an inlet of the second air duct.

12. The clothes treatment apparatus according to claim 11, further comprising:
a switching device configured to expose or cover the inlet of the second air duct, allowing the clothes treatment apparatus to be switchable between the first ventilation mode and the second ventilation mode through controlling a flowing or an interruption of an airflow between the second air duct and the air inlet cavity.
